# EUROPÄISCHE PATENTSCHRIFT

(11) **EP 0 395 969 B1**
(45) Veröffentlichungstag und Bekanntmachung des Hinweises auf die Patenterteilung: **07.09.1994**
(21) Anmeldenummer: 90107593.7
(22) Anmeldetag: 21.04.1990
(51) Int. Cl.: C08G 18/65, C08G 18/10, C08G 18/66

(54) **Verfahren zur Herstellung von Urethangruppen aufweisenden Polyharnstoff-Elastomeren**
Process for the preparation of urethane groups containing polyurea elastomers
Procédé de préparation d'élastomères de polyurée contenant des groupes d'uréthane

(30) Priorität: 04.05.1989 DE 3914718
(43) Veröffentlichungstag der Anmeldung: 07.11.1990
(73) Patentinhaber: BAYER AG, 51368 Leverkusen (DE)
(72) Erfinder: Ruckes, Andrea, Dr., D-5090 Leverkusen 3 (DE); Meiners, Hans-Joachim, Dr., D-5090 Leverkusen 1 (DE); Boden, Heinrich, D-5090 Leverkusen (DE); Schmidt, Manfred, Dr., D-4047 Dormagen (DE)

(56) Entgegenhaltungen:
- EP-A- 0 093 862
- EP-A- 0 225 640
- EP-B- 0 355 000
- US-A- 4 499 254
- Ullmanns Enzyklopädie der technischen Chemie, 4. Auflage, Band 19, Verlag Chemie, Weinheim 1980, Seite 309

## Beschreibung

Die Erfindung betrifft ein neues Verfahren zur Herstellung von Urethangruppen aufweisenden Polyharnstoff-Elastomeren auf der Basis von Polyisocyanaten oder Polyisocyanatgemischen der Diphenylmethanreihe, höhermolekularen Polyhydroxylverbindungen, alkylsubstituierten aromatischen Diaminen und höhermolekularen Polyaminoverbindungen nach dem Prinzip der Reaktionsspritzgußtechnik.

Die Herstellung von Urethangruppen aufweisenden Polyharnstoff-Elastomeren nach dem Prinzip der Reaktionsspritzgußtechnik unter Verwendung von Polyisocyanaten oder Polyisocyanatgemischen der Diphenylmethanreihe, höhermolekularen Polyetherpolyolen und alkylsubstituierten aromatischen Diaminen ist aus der DE-AS 2 622 951 (= US-PS 4 218 543) bereits bekannt, wobei nach dem one-shot-Verfahren gearbeitet, d.h. die Polyisocyanatkomponente mit einem Gemisch aus den Verbindungen mit gegenüber Isocyanatgruppen reaktionsfähigen Gruppen vermischt wird. Das Verfahren ist auf die Mitverwendung von starken Katalysatoren für die Reaktion zwischen Isocyanatgruppen und Hydroxylgruppen angewiesen.

Die US-PS 4 374 210 betrifft eine Abänderung dieses Verfahrens, gemäß welcher 0,01 bis 0,5 Äquivalente der höhermolekularen Polyolkomponente vorab mit der Polyisocyanatkomponente umgesetzt werden, um während der nachfolgenden Verarbeitung in etwa gleichvolumige Reaktionsströme miteinander umsetzen zu können. Die Autoren der US-PS 4 374 210 glaubten nämlich einen Nachteil des Verfahrens gemäß DE-AS 2 622 951 erkannt zu haben, der darin besteht, daß bei dem älteren Verfahren deutlich ungleiche Volumenströme (geringes Volumen der Polyisocyanatkomponente und großes Volumen der gegenüber Isocyanatgruppen reaktionsfähigen Komponente) miteinander vermischt werden müssen.

Überraschenderweise wurde jetzt gefunden, daß eine praktisch vollständige Vorreaktion der höhermolekularen Polyolkomponente mit der Polyisocyanatkomponente und anschließende Umsetzung des resultierenden NCO-Semiprepolymeren mit der Aminkomponente zu einer Reihe bemerkenswerter Vorteile führt, obwohl bei einer derartigen Arbeitsweise ebenfalls extrem unterschiedliche Volumenströme miteinander zur Reaktion gebracht werden müssen (großes Volumen des NCO-Semiprepolymeren und kleines Volumen der Aminkomponente).

Die Umsetzung von reinem oder polymerem 4,4′-Diisocyanatodiphenylmethan mit NCO-Gehalten von 30 - 33,6 Gew.-% mit alkylsubstituierten aromatischen Diaminen und Polyolgemischen ist nicht möglich, da die Reaktivität dieser Isocyanate zu hoch ist. Daher stellt man zunächst durch Vorreaktion mit aliphatischen Polyhydroxylverbindungen des Molekulargewichtes 62 bis 700, wie z.B. Ethylenglykol oder Tripropylenglykol, flüssige Semiprepolymere her, deren NCO-Gehalte zwischen 18 und 27 Gew.-% schwanken. Diese Semiprepolymere werden dann nach der RSG-Technik, wie z.B. in der DE-AS 2 622 951 beschrieben, zu Formteilen verarbeitet. Nachteilig bei diesem Verfahren ist, daß die vorab gebildeten Urethan-Gruppen thermisch wenig stabil sind und daher die maximal mögliche Wärmeformbeständigkeit, bezogen auf die Zahl der reagierenden NCO-Gruppen, bei weitem nicht erreicht wird. Nachteilig bei diesem Verfahren ist ferner die Verwendung von "hochveredelten" Verbindungen, d.h. teuren Isocyanaten, zur Erzeugung von Semiprepolymeren, die letztlich die Elastomereigenschaften nicht verbessern.

Das nachstehend näher beschriebene erfindungsgemäße Verfahren weist insbesondere folgende Vorteile auf:
1. Der weitaus größte Teil der Isocyanatgruppen wird zum Aufbau von Harnstoffhartsegmenten verwendet, nur das Minimum an Urethangruppen wird benötigt. Dies bedingt eine deutliche Einsparung von teurem Isocyanat im Vergleich zum One-Shot-RSG-Verfahren.
2. Bei gleichen Mengen an Diaminen und Polyisocyanaten resultiert eine signifikante Verbesserung der mechanischen und thermomechanischen Eigenschaften, insbesondere der Wärmeformbeständigkeit bei gleichzeitig guten Tieftemperatureigenschaften.
   Die Torsionskurve zeigt einen starken Abfall im Tieftemperaturbereich (-40°C bis 0°C) und einen flacheren Verlauf im Bereich oberhalb 100°C im Vergleich zu den Kurven der im One-Shot-Verfahren hergestellten Elastomeren.
3. Auf der Verwendung von Katalysatoren, die die Wärmeformbeständigkeit und die Alterungsbeständigkeit stark negativ beeinflußen, kann ganz verzichtet wewrden, da die im Vergleich zu den reaktiven Aminogruppen langsamen OH-Gruppen der Polyhydroxylverbindungen in der Vorreaktion schon abreagiert sind.

Die US-PS 4 297 444 beschreibt zwar bereits die Herstellung von Polyurethanformkörpern nach dem Prinzip der Reaktionsspritzgußtechnik unter Verwendung von organischen Polyisocyanaten, höhermolekularen Polyhydroxylverbindungen und niedermolekularen Kettenverlängerungsmitteln, wobei auch hier gemäß einer bevorzugten Arbeitsweise die Gesamtmenge der höhermolekularen Polyhydroxylkomponente vorab mit der Polyisocyanatkompokomponente zu einem NCO-Semiprepolymer umgesetzt wird, jedoch vermittelt diese Vorveröffentlichung keinen Hinweis, daß auch Systeme der erfindungsgemäß einzusetzenden Art, d.h. solche, deren Diaminkomponente aus alkylsubstituierten aromatischen Diaminen besteht, nach diesem Prinzip verarbeitbar sein würden bzw. bei einem solchen Verfahen die genannten Vorteile resultieren würden. Die Vorveröffentlichung erwähnt in der Liste der geeigneten Kettenverlängerungsmittel beiläufig zwar auch aromatische Diamine, ohne jedoch hierauf näher einzugehen. Als bevorzugte Kettenverlängerungsmittel werden vielmehr einfache Diole wie Ethylenglykol oder 1,4-Butandiol herausgestellt. In den Ausführungsbeispielen wird ausschließlich Ethylenglykol verwendet. Die Verarbeitbarkeit von Reaktivsystemen, bestehend aus einem großen Volumenstrom NCO-Semiprepolymer und einem kleinen Volumenstrom hochreaktiver Polyamine der erfindungsgemäß einzusetzenden Art nach der Reaktionsspritzgußtechnik konnte somit aus der Lehre der US-PS 4 297 444 nicht hergeleitet werden.

Auch die Lehre der DE-AS 1 240 654 konnte das erfindungsgemäße Verfahren nicht nahelegen, da gemäß dieser Vorveröffentlichung, wie den Ausführungsbeispielen zu entnehmen, vorzugsweise monomerenfreie, d.h. echte NCO-Prepolymere auf Basis andere Polyisocyanate als solchen der erfindungsgemäß einzusetzenden Art und difunktionelle Polyhydroxylverbindungen, vorzugsweise in Gegenwart von Lösungsmitteln mit alkylsubstituierten Diaminen nach dem klassischen Prepolymerverfahren und keineswegs nach dem Prinzip der Reaktionsspritzgußtechnik zur Reaktion gebracht werden.

Gegenstand der Erfindung ist das Verfahren gemäß Hauptanspruch.

Der Begriff "Polyisocyanat der Diphenylmethanreihe" stellt den Oberbegriff für alle Polyisocyanate dar, wie sie bei der Phosgenierung von Anilin/Formaldehyd-Kondensaten anfallen und in den Phosgenierungsprodukten als Gemisch vorliegen. Der Begriff "Polyisocyanatgemisch der Diphenylmethanreihe" steht für beliebige Gemische von Polyisocyanaten der Diphenylmethanreihe, d.h. beispielsweise für die genannten Phosgenierungsprodukte, die Gemische, die bei der destillativen Auftrennung derartiger Gemische als Destillat oder Destillationsrückstand anfallen und beliebige Abmischungen von Polyisocyanaten der Diphenylmethanreihe.

Der Begriff "NCO-Semiprepolymer" steht für Umsetzungsprodukte von Polyisocyanaten der erfindungsgemäß einzusetzenden Art mit unterschüssigen Mengen an höhermolekularen Polyhydroxylverbindungen der erfindungsgemäß einzusetzenden Art. Bei den NCO-Semiprepolymeren handelt es sich um Gemische von echten Umsetzungsprodukten mit überschüssigen, nicht umgesetzten Polyisocyanaten.

Unter "Isocyanatkennzahl" versteht man den Quotienten aus Anzahl der Isocyanatgruppen und Anzahl der gegenüber Isocyanatgruppen reaktionsfähigen Gruppen, multipliziert mit 100.

Beim erfindungsgemäßen Verfahren werden als Ausgangskomponente a) beliebige Polyisocyanate oder Polyisocyanatgemische der Diphenylmethanreihe, gegebenenfalls in modifizierter Form, eingesetzt. Bei der chemischen Modifizierung handelt es sich um eine chemische Reaktion, die zur Verflüssigung von festen Polyisocyanaten, insbesondere von 4,4′-Diisocyanatodiphenylmethan führt.

Typische Beispiele für geeignete Polyisocyanate a) sind 4,4′-Diisocyanatodiphenylmethan, dessen Gemische mit 2,2′- und insbesondere 2,4′-Diisocyanatodiphenylmethan, Gemische dieser Diisocyanatodiphenylmethan-Isomeren mit ihren höheren Homologen, wie sie bei der Phosgenierung von Anilin/Formaldehyd-Kondensaten anfallen, durch partielle Carbodiimidisierung der Isocyanatgruppen der genannten Di- und/oder Polyisocyanate, modifizierte Di- und/oder Polyisocyanate oder beliebige Gemische derartiger Polyisocyanate.

Gegebenenfalls können jedoch auch bis zu 30 Gew.-%, vorzugsweise bis 20 Gew.-%, bezogen auf die Komponente a), Urethangruppen aufweisende Umsetzungsprodukte der genannten Di- und/oder Polyisocyanate mit unterschüssigen Mengen an aliphatischen Polyhydroxylverbindungen des Molekulargewichtsbereichs 62 bis 700 wie z.B. Ethylenglykol, Trimethylolpropan, Propylenglykol, Dipropylenglykol oder Polypropylenglykole des genannten Molekulargewichtsbereiches, bei der Semiprepolymerisierung mitverwendet werden.

Die Polyolkomponente b) weist ein aus dem Hydroxylgruppengehalt und der Hydroxylfunktionalität errechenbares (mittleres) Molekulargewicht von 1500 bis 18 000, vorzugsweise 2000 bis 14 000 und eine (mittlere) Hydroxylfunktionalität von mindestens 2,5, vorzugsweise von mindestens 3, besonders bevorzugt von mindestens 3,5, auf.

Geeignet sind insbesondere die dieser Definition entsprechenden Polyether- oder Polyesterpolyole bzw. Gemische derartiger Polyhydroxylverbindungen. In Betracht kommen beispielsweise entsprechende Polyetherpolyole, die gegebenenfalls organische Füllstoffe in dispergierter Form enthalten. Bei diesen dispergierten Füllstoffen handelt es sich beispielsweise um Vinylpolymerisate, wie sie z.B. durch Polymerisation von Acrylnitril und Styrol in den Polyetherpolyolen als Reaktionsmedium entstehen (US-PS 3 383 351, 3 304 273, 3 523 093, 3 110 695, DE-PS 1 152 536) oder um Polyharnstoffe oder Polyhydrazide, wie sie durch eine Polyadditionsreaktion in den Polyetherpolyolen als Reaktionsmedium aus organischen Diisocyanaten und Diaminen bzw. Hydrazin entstehen (DE-PS 1 260 142, DE-OS 2 423 984, 2 519 004, 2 513 815, 2 550 833, 2 550 862, 2 633 293 oder 2 550 796).

Die Polyetherpolyole werden in an sich bekannter Weise durch Alkoxylierung von geeigneten Startermolekülen oder von Gemischen geeigneter Startermoleküle hergestellt, wobei zur Alkoxylierung insbesondere Propylenoxid und gegebenenfalls zusätzlich Ethylenoxid verwendet werden. Geeignete Startermoleküle sind beispielsweise Wasser, Ethylenglykol, Propylenglykol, Trimethylolpropan, Pentaerythrit, Sorbit oder Rohrzucker oder Gemische derartiger Verbindungen, wobei die Funktionalität der Startermoleküle bzw. die mittlere Funktionalität der Gemische der Startermoleküle den oben gemachten Ausführungen bezüglich der Hydroxylfunktionalität angepaßt werden muß. Besonders bevorzugt sind solche Polyetherpolyole, deren Hydroxylgruppen zumindest zu 50 %, vorzugsweise zumindest zu 70 % aus primären Hydroxylgruppen bestehen. Derartige Polyetherpolyole entstehen durch endständiges Aufpfropfen von Ethylenoxid.

Geeignete Polyesterpolyole sind z.B. die in DE-AS 2 622 951, Kolonne 7, Zeile 54 bis Kolonne 8, Zeile 37 genannten Verbindungen, soweit sie den oben gemachten Ausführungen bezüglich Molekulargewicht und Hydroxylfunktionalität entsprechen.

Besonders bevorzugt werden beim erfindungsgemäßen Verfahren als Komponente b) Polyetherpolyole oder Abmischungen von Polyetherpolyolen der genannten Art verwendet.

Bei der Komponente c) handelt es sich um ein Gemisch aus 95 bis 50 Gew.-Teilen, bezogen auf 100 Gew.-Teile c), an aromatischen Diaminen c1) und 5 bis 50 Gew.-Teilen, bezogen auf 100 Gew.-Teile c), an Aminogruppen aufweisenden Verbindungen c2).

Bei der Komponente c1) handelt es sich um Diamine des Molekulargewichtsbereichs 122 bis 400 mit ausschließlich aromatisch gebundenen primären Aminogruppen, die zumindest in jeweils einer ortho-Stellung zu den Aminogruppen einen Alkylsubstituenten aufweisen, insbesondere um solche, die in ortho-Stellung zu der ersten Aminogruppen mindestens einen Alkylsubstituenten und in ortho-Stellung zur zweiten Aminogruppen zwei Alkylsubstituenten mit jeweils 1 bis 4, vorzugsweise 1 bis 3 Kohlenstoffatomen aufweisen, besonders bevorzugt um solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen. Beispiele für derartige Diamine bzw. bevorzugte Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, dessen technische Gemische mit 1-Methyl-3,5-diethyl-2,6-diaminobenzol oder 3,5,3′,5′-Tetraisopropyl-4,4′-diaminodiphenylmethan. Beliebige Gemische derartiger Diamine können ebenfalls als Komponente c) verwendet werden. Besonders bevorzugt handelt es sich bei der Komponente c) um 1-Methyl-3,5-diethyl-2,4-diaminobenzol oder um dessen technische Gemische mit 1-Methyl-3,5-diethyl-2,6-diaminobenzol (DETDA).

Bei der Komponente c2) handelt es sich um mindestens 2, vorzugsweise 2 bis 4 gegenüber Isocyanatgruppen reaktionsfähige Gruppen aufweisende Polyether des Molekulargewichtsbereichs 1000 bis 12 000, vorzugsweise 2000 bis 8000, deren vorzugsweise endständig angeordneten, gegenüber Isocyanatgruppen reaktionsfähigen Gruppen zumindest zu 80 Äquivalentprozent aus primären und/oder sekundären, aromatisch oder aliphatisch, vorzugsweise aromatisch gebundenen Aminogruppen bestehen. Das Molekulargewicht kann beispielsweise aus der Funktionalität und dem Gehalt an gegenüber Isocyanatgruppen reaktionsfähigen Gruppen berechnet werden.

Die Herstellung dieser als Komponente c2) geeigneten "Aminopolyether" erfolgt in an sich bekannter Weise. So kann beispielsweise eine Aminierung von Polyhydroxypolyethern wie z.B. Polypropylenglykolethern durch Reaktion mit Ammoniak in Gegenwart von Raney-Nickel und Wasserstoff durchgeführt werden (BE-PS 634 741). US-PS 3 654 370 beschreibt die Herstellung von Polyoxyalkylenpolyaminen durch Umsetzung des entsprechenden Polyols mit Ammoniak und Wasserstoff in Gegenwart eines Nickel-, Kupfer-, Chrom-Katalysators. In der DE-PS 1 193 671 wird die Herstellung von Polyethern mit Amino-Endgruppen durch Hydrierung von cyanethylierten Polyoxypropylenethern beschrieben. Weitere Methoden zur Herstellung von Poloxyalkylen-(Polyether)-aminen sind in US-PS 3 155 728, US-PS 3 236 895 und FR-PS 1 551 605 beschrieben. In der FR-PS 1 466 708 wird beispielsweise die Herstellung von sekundäre Amino-Endgruppen aufweisenden Polyethern beschrieben.

Höhermolekulare Polyhydroxypolyether können durch Reaktion mit Isatosäureanhydrid in die entsprechenden, erfindungsgemäß als Komponente b) geeigneten Anthranilsäureester überführt werden, wie dies beispielsweise in DE-OS 2 019 432, DE-OS 2 619 840, US-PS 3 808 250, US-PS 3 975 428 oder US-PS 4 016 143 beschrieben ist. Auf diese Weise entstehen Polyether mit endständigen aromatischen Aminogruppen.

Durch Umsetzung von NCO-Prepolymeren auf Basis von Polyhydroxypolyethern mit Hydroxylgruppen aufweisenden Enaminen, Aldiminen oder Ketiminen und anschließende Hydrolyse erhält man gemäß DE-OS 2 546 536 bzw. US-PS 3 865 791 höhermolekulare, endständige Aminogruppen aufweisende Verbindungen.

Bevorzugt als Komponente c2) eingesetzt werden Aminopolyether, die nach DE-OS 2 948 419 oder EP-A-0 219 035 durch Hydrolyse von endständige Isocyanatgruppen aufweisende Verbindungen erhalten werden. Bei diesen Verfahren werden vorzugsweise zwei oder drei Hydroxylgruppen aufweisende Polyether oder -ester mit Polyisocyanaten zu NCO-Prepolymeren umgesetzt und in einem zweiten Schritt die Isocyanatgruppen durch Hydrolyse in Aminogruppen überführt.

Die erfindungsgemäß als Komponente c2) einzusetzenden "Aminopolyether" stellen oftmals Gemische der beispielhaft genannten Verbindungen dar.

Bei den gegebenenfalls mitzuverwendenden Hilfs- und Zusatzmitteln d) handelt es sich beispielsweise um mineralische Füllstoffe, Farbstoffe, Pigmente und/oder organische Treibmittel, Derartige, an sich bekannte Hilfs- und Zusatzmittel sind beispielsweise in EP-B-81 701 beschrieben, Weiterhin können sogenannte innere Formtrennmittel als gegebenenfalls mitzuverwendende Komponente d) eingesetzt werden. Geeignete innere Formtrennmittel sind ebenfalls in der EP-B-81 701 beschrieben. Besonders gut geeignete innere Formtrennmittel sind jedoch die an sich bekannten Lösungen von Zinkcarboxylaten, vorzugsweise Zinkstearat, in aminischen Lösungsmitteln, wie beispielsweise ®Jeffamin 400 der Firma Texaco oder dem Anlagerungsprodukt von 5 Mol Propylenoxid an 1 Mol Ethylendiamin oder Gemischen derartiger aminischer Lösungsmittel. Derartige innere Formtrennmittel werden beispielsweise in US-PS 4 585 803, US-PS 4 519 965 oder EP-A-0 119 471 beschrieben.

Zur Durchführung des erfindungsgemäßen Verfahrens gelangt die Komponente b) in einer solchen Menge zum Einsatz, die einem NCO/OH-Äquivalentverhältnis, bezogen auf die Reaktivgruppen der Komponente a) und b), von mindestens 4:1, vorzugsweise mindestens 6:1 und insbesondere bis 15:1 entspricht. Die Komponente c) wird in einer solchen Menge verwendet, daß, bezogen auf die Gesamtmenge der Komponenten a), b) und c), eine Isocyanatkennzahl von 70 bis 130 gewährleistet ist.

Zur Durchführung des erfindungsgemäßen Verfahrens wird zunächst aus der Polyisocyanatkomponente a) und mindestens 90 %, vorzugsweise der Gesamtmenge der Polyolkomponente b) ein NCO-Semiprepolymer hergestellt. Die diesbezügliche Umsetzung erfolgt im allgemeinen innerhalb des Temperaturbereichs von 25 bis 100°C. Bei der Herstellung der NCO-Semiprepolymere kann nach unterschiedlichen Varianten vorgegangen werden, beispielsweise kann die Gesamtmenge der Polyisocyanatkomponente a) mit der Gesamtmenge der zur Herstellung der NCO-Semiprepolymeren vorgesehenen Komponente b) umgesetzt werden, jedoch ist es auch möglich, zunächst nur einen Teil der Polyisocyanatkomponente a) mit der zur Herstellung der NCO-Semiprepolymeren vorgesehenen Menge der Komponente b) umzusetzen und anschließend dieses Umsetzungsprodukt mit der restlichen Menge der Polyisocyanatkomponente a) abzumischen.

Die so erhaltenen NCO-Semiprepolymeren stellen dann die Komponente A) für die weitere Umsetzung dar.

Die Komponente A) wird in der zweiten Stufe des erfindungsgemäßen Verfahrens mit der Komponente B) nach dem Prinzip der Reaktionsspritzgußtechnik unter Verwendung von geschlossenen Formen verarbeitet. Die Komponente B) besteht aus der Aminkomponente c) und gegebenenfalls bis zu 10 % der Polyolkomponente b), die nicht zur Herstellung der NCO-Semiprepolymeren verwendet worden ist. Die gegebenenfalls mitverwendeten Hilfs- und Zusatzmittel können sowohl der Komponente A) als auch der Komponente B) vor der Durchführung der zweiten Stufe des Verfahrens einverleibt werden.

Bei der Durchführung der zweiten Stufe des erfindungsgemäßen Verfahrens wird nach der bekannten Reaktionsspritzgußtechnik (RSG-Verfahren, englisch: "RIM-process") verfahren, wie sie beispielsweise in den oben zitierten Literaturstellen beschrieben ist. Die Menge des in die Form eingebrachten Reaktionsgemischs wird im übrigen so bemessen, daß die Formkörper eine Dichte von 0,8 bis 1,4, vorzugsweise 1,0 bis 1,3 g/cm³ aufweisen. Bei Formkörpern einer Dichte von 0,8 bis ca. 1,0 g/cm³ handelt es sich um mikrozellulare Elastomeren, d.h. um keine echten Schaumstoffe mit mit dem bloßen Auge sichtbarer Schaumstruktur, Dies bedeutet, daß die gegebenenfalls mitverwendeten Treibmittel weniger die Funktion eines echten Treibmittels als vielmehr die Funktion eines Fließmittels ausüben. Formkörper mit einer über 1,2 g/cm³ liegenden Dichte resultieren insbesondere dann, wenn mineralische Füllstoffe mitverwendet werden.

Die Ausgangstemperatur des in die Form eingebrachten Reaktionsgemischs aus den Komponenten A) und B) liegt im allgemeinen zwischen 20 und 80, vorzugsweise 40 bis 70°C. Die Temperatur der Form liegt bei 30 bis 80°C.

Bei den zum Einsatz gelangenden Formwerkzeugen handelt es sich um solche der an sich bekannten Art, vorzugsweise aus Aluminium oder Stahl. Zur Verbesserung der Entformungseigenschaften können die Innenwände der verwendeten Form gegebenenfalls mit bekannten äußeren Formtrennmitteln beschichtet werden.

Die in der Form entstehenden Formkörper werden nach einer Formstandzeit von 5 bis 180 Sekunden entformt. Gegebenenfalls schließt sich an der Entformung ein Tempern bei einer Temperatur von ca. 60 bis 180°C während eines Zeitraums von 30 bis 120 Minuten an.

Die nach dem erfindungsgemäßen Verfahren erhältlichen Formkörper eignen sich insbesondere zur Herstellung von flexiblen Automobilstoßstangen bzw. von flexiblen Karosserieelementen.

### Beispiele

Die Verarbeitung der in den folgenden Beispielen beschriebenen Rezepturen erfolgte mit Hilfe der Reaktionsspritzgußtechnik (englisch "reaction injection moulding" (RIM)).

Die Polyisocyanatkomponenten und der Kettenverlängerer wurden einem Hochdruckdosieraggregat zugeführt und nach intensiver Vermischung in einem zwangsgesteuerten Mischkopf in kürzester Zeit in ein temperierbares heißes Metallwerkzeug gedrückt, wobei die Forminnenwand mit einem gebrauchsfertigen, handelsüblichen äußeren Formtrennmittel auf Wachsbasis ®RTCW 2006 der Firma Chemtrend beschichtet war.

Das Plattenwerkzeug aus Stahl erlaubt die Herstellung von Prüfplatten der Abmessungen 300 x 200 x 3 mm. Das Füllen des Werkzeugs erfolgt von der Längsseite über einen Staubalkenanguß.

Die Werkzeugtemperatur betrug 80°C, die Formstandzeit 30 Sekunden.

Unter diesen Bedingungen resultierten Formteile mit einwandfreiem Entformungsverhalten und Aussehen. Die mechanischen Werte wurden danach an den Testplatten ermittelt (nach Tempern 30′ bei 120°C).

In den Beispielen wurden folgende Ausgangskomponenten verwendet:
- Polyetherpolyol 1 PE 1: der OH-Zahl 35, hergestellt durch Addition von 87 Gew.-% Propylenoxid und anschließende Addition von 13 Gew.-% Ethylenoxid an Trimethylolpropan.
- Polyetherpolyol 2 PE 2: der OH-Zahl 28, hergestellt durch Addition von 87 Gew.-% Propylenoxid und anschließende Addition von 13 Gew.-% Ethylenoxid an Sorbit.
- Polyetherpolyol 3 PE 3: der OH-Zahl 35, hergestellt durch Addition von 87 Gew.-% Propylenoxid und anschließende Addition von 13 Gew.-% Ethylenoxid an Glycerin.
- Polyetherpolyol 4 PE 4: der OH-Zahl 56, hergestellt durch Addition von Propylenoxid an ein Gemisch von Trimethylolpropan und Wasser im Gewichtsverhältnis 1:1.
- Polyetherpolyol 5 PE 5: der OH-Zahl 56, erhalten durch Addition von Propylenoxid an Tripropylenglykol.
- Semiprepolymer 1 SP 1: hergestellt durch 3-stündige Umsetzung bei 80°C von 100 Gew.-Tln. des Polyetherpolyols 1 mit 60,2 Gew.-Tln. 4,4′-Diisocyanatodiphenylmethan. Der NCO-Gehalt beträgt 10,8 Gew.-%.
- Semiprepolymer 2 SP 2: hergestellt durch 3-stündige Umsetzung bei 80°C von 100 Gew.-Tln. einer 1:1 Mischung der Polyetherpolyole 1 und 2 (Misch-OH-Zahl 31,5) mit 59,8 Gew.-Tln. einer 9:1 Mischung von 4,4′-Diisocyanatodiphenylmethan und ®Desmodur CD (ancarbodiimisiertes 4,4′-Diisocyanatodiphenylmethan, Handelsprodukt der Fa. Bayer) mit einem NCO-Gehalt von 11 Gew.-%.
- Kettenverlängerer: KV: Mischung aus 65 Gew.-% 1-Methyl-3,5-diethyl-2,4-diaminobenzol und 35 Gew.-% 1-Methyl-3,5-diethyl-2,6-diaminobenzol.
- Polyetherpolyamin 1 ATP 1: der NH-Zahl 44.8, hergestellt durch Hydrolyse eines NCO-Prepolymeren mit einem NCO-Gehalt von 3,2 Gew.-%, erhalten durch Umsetzung eines 2:1 Gemisches der Polyetherpolyole 3 und 4 mit 2,4-Diisocyanatotoluol im Äquivalentverhältnis NCO:OH = 2:1.
- Polyetherpolyamin 2 ATP 2: der NH-Zahl 48, hergestellt durch Hydrolyse eines NCO-Prepolymeren mit einem NCO-Gehalt von 3,6 Gew.-%, erhalten durch Umsetzung des Polyetherpolyols 5 mit 2,4-Diisocyanatotoluol im Äquivalentverhältnis NCO:OH = 2:1.
- Polyetherpolyamin 3 ATP 3: Polyetherpolyamin der Fa. Texaco mit einer NH-Zahl von 33,6 (®Jeffamin T 5000).
- Polyetherpolyamin 4 ATP 4: Polyetherpolyamin der Fa. Texaco mit einer NH-Zahl von 280 (®Jeffamin D 400).

### Beispiele 1 bis 5: siehe Tabelle 1

**Tabelle 1**

| Rezeptur: | | | | | |
|---|---|---|---|---|---|
| Beispiel | 1 | 2 | 3 | 4 | 5 |
| Mischungsverhältnis: (KV/ATP) | 10:1 | 5:1 | 1:1 | 10:1 | 10:1 |
| KV (Gew.-Tle.) | 22,7 | 22,5 | 21,3 | 22,7 | 22,7 |
| ATP 1 (Gew.-Tle.) | 2,27 | 4,5 | 21,3 | | |
| ATP 2 (Gew.-Tle.) | | | | 2,27 | |
| ATP 3 (Gew.-Tle.) | | | | | 2,27 |
| SP 1 (Gew.-Tle.) | 100 | 100 | 100 | 100 | 100 |
| Mischungsverhältnis: (SP : KV/ATP) | 4:1 | 3,7:1 | 2,35:1 | 4:1 | 4:1 |
| Kennzahl | 100 | 100 | 100 | 100 | 100 |
| Rohdichte (kg/m³) (DIN 53420) | 1,1 | 1,11 | 1,1 | 1,11 | 1,11 |
| Shore D (DIN 53505) | 61 | 60 | 54 | 60 | 61 |
| Biegemodul (MPa) (ASTM-D 790-71) | 350 | 330 | 240 | 350 | 340 |
| Zugfestigkeit (MPa) (DIN 53504) | 32 | 30 | 25 | 31 | 30 |
| Bruchdehnung (%) (DIN 53504) | 210 | 230 | 320 | 260 | 260 |
| SAG-Test (mm) | 5 | 6 | 8 | 8 | 5 |
| 1h/160°C | | | | | |
| 100 mm Prüfkörperdicke | | | | | |

### Beispiel 6

In diesem Beispiel wurde genauso verfahren wie in den Beispielen 1 bis 5, mit den Unterschieden, daß der Isocyanatkomponente vor der Umsetzung zusätzlich 32,7 Gew.-Tle. Glasfasern als Füllstoff zugesetzt wurden (Verhältnis der Volumenströme ca. 4,3:1) und das Zn-stearat gelöst in ATP 4 (1:1) als inneres Trennmittel der Aminkomponente zugesetzt wurden.

| Rezeptur: | |
|---|---|
| KV (Gew.-Tle.) | 21,7 |
| ATP 1 (Gew.-Tle.) | 6,2 |
| D 400 (Gew.-Tle.) | 1,55 |
| Zn-stearat (Gew.-Tle.) | 1,55 |
| SP 2 (Gew.-Tle.) | 100 |
| Kennzahl: | 100 |

| Meßwerte: | |
|---|---|
| Rohdichte (kg/m³) (DIN 53420) | 1,24 |
| Shore D (DIN 53505) | 65 |
| Biegemodul (MPa) (ASTM-D 790-71) | 1180 |
| Zugfestigkeit (MPa) (DIN 53504) | 27 |
| Bruchdehnung (%) (DIN 53504) | 170 |
| SAG-Test (mm) | 4 |
| 1h/160°C | |
| 100 mm Prüfkörperdicke | |

## Patentansprüche

1. Verfahren zur Herstellung von gegebenenfalls zellförmigen, elastischen Formkörpern mit einer geschlossenen Oberflächenschicht aus Urethangruppen aufweisenden Polyharnstoff-Elastomeren auf der Basis von
a) einer Polyisocyanatkomponente, bestehend aus einem, gegebenenfalls durch chemische Modifizierung verflüssigten, Polyisocyanat oder Polyisocyanatgemisch der Diphenylmethanreihe,
b) einer Polyolkomponente mit einem mittleren Molekulargewicht von 1500 bis 18 000 und einer mittleren Hydroxylfunktionalität von mindestens 2,5, bestehend aus mindestens einem, gegebenenfalls dispergierte organische Füllstoffe enthaltenden Polyether- oder Polyesterpolyol,
c) einer Polyaminkomponente,
d) gegebenenfalls den aus der Polyurethanchemie an sich bekannten Hilfs- und Zusatzmitteln,
wobei das Mengenverhältnis der Komponenten a) und b) einem NCO/OH-Äquivalentverhältnis von mindestens 4:1 entspricht, und die Komponente c) in einer solchen Menge zur Anwendung gelangt, daß die NCO-Kennzahl, bezogen auf die Komponenten a), b) und c) bei 70 bis 130 liegt,
dadurch gekennzeichnet, daß man
(i) als Komponente c) ein Gemisch aus c1) 95 bis 50 Gew.-Teilen, bezogen auf 100 Gew.-Teile c), aromatischer Diamine des Molekulargewichtsbereichs 122 bis 400, die zumindest in jeweils einer ortho-Stellung zu den Aminogruppen einen Alkylsubstituenten aufweisen und c2) 5 bis 50 Gew.-Teilen, bezogen auf 100 Gew.-Teile c) an Verbindungen des Molekulargewichtsbereichs 1000 bis 12 000, die mindestens zwei gegenüber Isocyanatgruppen reaktionsfähige Gruppen aufweisen, die ihrerseits zumindest zu 80 % aus primären und/oder sekundären Aminogruppen bestehen, verwendet und
(ii) mindestens 90 % der Komponente b) mit der Gesamtmenge der Komponente a) oder einem Teil hiervon zu einem Isocyanatgruppen aufweisenden Semiprepolymeren umsetzt und dieses, gegebenenfalls nach Abmischen mit der restlichen Menge der Komponente a), mit der Komponente c) oder einem Gemisch der Komponente c) mit bis zu 10 Gew.-% der Komponente b) nach der Reaktionsspritzgußtechnik unter Einhaltung einer Formtemperatur von 30 bis 80°C und einer Formstandzeit von 5 bis 180 Sekunden zur Reaktion bringt, wobei die gegebenenfalls mitverwendeten Hilfs- und Zusatzmittel einer oder beiden der genannten Reaktionskomponenten einverleibt werden.

2. Verfahren gemäß Anspruch 1, dadurch gekennzeichnet, daß man die Gesamtmenge der Komponente b) mit der Komponente a) zu einem NCO-Semiprepolymeren umsetzt.

3. Verfahren gemäß Anspruch 1 und 2, dadurch gekennzeichnet, daß man als Komponente b) Polyetherpolyole eines mittleren Molekulargewichts von 2000 bis 14 000 und einer mittleren Hydroxylfunktionalität von mindestens 3 verwendet.

4. Verfahren gemäß Anspruch 1 bis 3, dadurch gekennzeichnet, daß man als Komponente c1) 1-Methyl-3,5-diethyl-2,4-diaminobenzol oder dessen technischen Gemische mit 1-Methyl-3,5-diethyl-2,6-diaminobenzol verwendet.

## Claims

1. A process for the preparation of optionally cellular, elastic moulded bodies with a closed surface layer of polyurea elastomers which contain urethane groups, based on
a) a polyisocyanate component, consisting of a polyisocyanate or polyisocyanate mixture from the diphenylmethane series, optionally liquefied by chemical modification,
b) a polyol component with an average molecular weight of 1500 to 18 000 and an average hydroxyl functionality of at least 2.5, consisting of at least one polyetherpolyol or polyesterpolyol which optionally contains dispersed organic fillers,
c) a polyamine component,
d) optionally, auxiliary agents and additives known per se from polyurethane chemistry,
wherein the ratio by amounts of components a) and b) corresponds to a ratio by equivalents of NCO/OH of at least 4:1, and component c) is used in an amount such that the NCO value, with reference to components a), b) and c) is 70 to 130,
characterised in that,
(i) a mixture of c1) 95 to 50 parts by wt., with reference to 100 parts by wt. of c), of aromatic diamines with molecular weights in the range 122 to 400, which have an alkyl substituent in at least one of each of the ortho-positions to the amino groups and c2) 5 to 50 parts by wt., with reference to 100 parts by wt. of c), of compounds with molecular weights in the range 1000 to 12 000 which have at least two groups which react with isocyanate groups, which for their part consist of up to 80% primary and/or secondary amino groups, is used as component c), and
(ii) at least 90% of component b) reacts with the entire amount of component a) or a part thereof to give a semi-prepolymer which possesses isocyanate groups and this, optionally after admixture of the remaining amount of component a), is reacted with component c) or a mixture of component c) with up to 10 wt.% of component b) using reaction injection moulding techniques, maintaining a mould temperature of 30 to 80°C and a residence time of 5 to 180 seconds, wherein the optionally co-used auxiliary agents and additives are incorporated into one or both of the reaction components mentioned.

2. A process according to Claim 1, characterised in that the entire amount of component b) reacts with component a) to give an NCO semi-prepolymer.

3. A process according to Claims 1 and 2, characterised in that polyetherpolyols with an average molecular weight of 2000 to 14 000 and an average hydroxyl functionality of at least 3 are used as component b).

4. A process according to Claims 1 to 3, characterised in that 1-methyl-3,5-diethyl-2,4-diaminobenzene or its industrial mixture with 1-methyl-3,5-diethyl-2,6-diaminobenzene is used as component c1).

## Revendications

1. Procédé pour la préparation de corps moulés élastiques éventuellement alvéolaires comprenant une couche superficielle fermée constituée par des élastomères de polyurée présentant des groupes uréthanne, à base de
a) un composant de polyisocyanate constitué par un polyisocyanate ou un mélange de polyisocyanates de la série des diphénylméthanes, éventuellement liquéfié par modification chimique,
b) un composant de polyol ayant un poids moléculaire moyen de 1.500 à 18.000 et une fonctionnalité hydroxyle moyenne d'au moins 2,5, constitué par au moins un polyéther ou un polyester-polyol contenant éventuellement des matières de charge organiques en dispersion,
c) un composant de polyamine,
d) éventuellement les adjuvants et les additifs connus en soi d'après la chimie des polyuréthannes,
dans lequel la proportion des composants a) et b) correspond à un rapport d'équivalent NCO/OH d'au moins 4:1, et on utilise le composant c) en une quantité telle que l'indice NCO, rapporté aux composants a), b) et c), se situe de 70 à 130,
caractérisé en ce que
(i) comme composant c), on utilise un mélange de c1) 95 à 50 parties en poids, rapportées à 100 parties en poids de c), de diamines aromatiques du domaine de poids moléculaire de 122 à 400, qui présentent au moins un substituant alkyle dans chacune des positions ortho par rapport aux groupes amino et de c2) de 5 à 50 parties en poids, rapportées à 100 parties en poids de c), de composés du domaine de poids moléculaire de 1.000 à 12.000, qui présentent au moins deux groupes aptes à réagir vis-à-vis de groupes isocyanate, qui sont constitués, pour leur part, au moins à concurrence de 80%, de groupes amino primaires et/ou secondaires, et
(ii) on fait réagir au moins 90% du composant b) avec la quantité totale du composant a) ou avec une partie de ce dernier pour obtenir un semi-prépolymère présentant des groupes isocyanate et on amène à réagir ce dernier, éventuellement après mélange avec la quantité restante du composant a), avec le composant c) ou avec un mélange du composant c), avec jusqu'à 10% en poids du composant b) conformément à la technique de moulage réactif par injection, en maintenant une température de 30 à 80°C et un temps de séjour dans le moule de 5 à 180 secondes, les adjuvants et les additifs utilisés éventuellement de manière conjointe étant incorporés à un des composants réactionnels mentionnés ou aux deux.

2. Procédé selon la revendication 1, caractérisé en ce qu'on fait réagir la quantité totale du composant b) avec le composant a) pour obtenir un semi-prépolymère NCO.

3. Procédé selon les revendications 1 et 2, caractérisé en ce que, comme composant b), on utilise des polyéther-polyols d'un poids moléculaire moyen de 2.000 à 14.000 et d'une fonctionnalité hydroxyle moyenne d'au moins 3.

4. Procédé selon les revendications 1 à 3, caractérisé en ce que, comme composant c1), on utilise le 1-méthyl-3,5-diéthyl-2,4-diaminobenzène ou encore ses mélanges techniques avec le 1-méthyl-3,5-diéthyl-2,6-diaminobenzène.
